# EUROPÄISCHE PATENTSCHRIFT

(11) **EP 1 562 102 B1**
(45) Veröffentlichungstag und Bekanntmachung des Hinweises auf die Patenterteilung: **19.03.2008**
(21) Anmeldenummer: 05001161.8
(22) Anmeldetag: 21.01.2005
(51) Int. Cl.: G06F 3/00, B60K 37/06

(54) **Kraftfahrzeug mit Funktionsauslösung durch Blickauswahl**
Motor vehicle including function actuation by eye tracking
Automobile à actuation de fonctions par détection de mouvements oculaires

(30) Priorität: 06.02.2004 DE 102004005816
(43) Veröffentlichungstag der Anmeldung: 10.08.2005
(73) Patentinhaber: AUDI AG, 85045 Ingolstadt (DE)
(72) Erfinder: Hilpoltsteiner, Christian, 85309 Pörnbach (DE)
(74) Vertreter: Thielmann, Frank

(56) Entgegenhaltungen:
- EP-A- 1 123 842
- DE-A1- 10 121 392
- DE-A1- 19 807 410
- US-A- 4 827 520
- PATENT ABSTRACTS OF JAPAN Bd. 2000, Nr. 03, 30. März 2000 (2000-03-30) & JP 11 337375 A (NISSAN ALTIA CO LTD; STANLEY ELECTRIC CO LTD), 10. Dezember 1999 (1999-12-10)

## Beschreibung

Die Erfindung betrifft ein Kraftfahrzeug umfassend Symbolflächen mit jeweils einem eine kfz-seitig ausführbare Funktion darstellenden Symbol oder dergleichen im Sichtbereich des Fahrers, eine Einrichtung zur Erfassung der Blickrichtung des Fahrers bezüglich der Symbolflächen, zur Bestimmung einer betrachteten Symbolfläche und zur Auslösung der einer Symbolfläche zugeordneten Funktion in Abhängigkeit des Erfassungsergebnisses sowie eine Bestätigungseinrichtung für die Blickauswahl.

In bisherigen Kraftfahrzeugen gibt es zur Auslösung kfz-seitiger Funktionen zum einen herkömmliche Stellelemente, die der Fahrer mit seinem Blick erfassen muss, bevor er die Hand oder einen Finger heranführen kann, um durch eine Druck- oder Drehbewegung eine Funktion auszulösen. Diese Stellelemente müssen in direkter Reichweite des Fahrers positioniert sein, dennoch muss die Hand das Lenkrad für eine Zeit verlassen. Zum anderen setzen sich in letzter Zeit mehr und mehr Konzepte durch, die auf einer Blickauswahl beruhen. Dabei wird insbesondere bei Displays z. B. über Kameras die Blickrichtung des Fahrers erfasst, eine betrachtete Symbolfläche mit einem dargestellten Symbol bestimmt und nach einer Bestätigung eine zugeordnete Funktion ausgelöst. Ein solches auf einem Display dargestelltes Symbol ist dabei variabel, entsprechend können die zugeordneten Funktionen variieren. Diese beiden Konzepte zur Funktionsauslösung existieren bisher parallel, wobei bei herkömmlichen Stellelementen durch das nötige Verlassen der Lenkradposition, die Einschränkung bei der Anordnung des Stellelements in Fahrerreichweite und den großen Zeitbedarf zwischen Funktionswunsch und Funktionsauslösung Einschränkungen des Bedienkomforts sowie der Bediensicherheit gegeben sind.

DE-10 121 392 beschreibt ein Kraftfahrzeug mit den Merkmalen des Oberbegriffs des Anspruchs 1.

Der Erfindung liegt damit die Aufgabe zugrunde, ein Kraftfahrzeug mit den oben angegebenen Merkmalen anzugeben, bei dem eine verbesserte Funktionsanwahl und -auslösung möglich ist.

Zur Lösung dieser Aufgabe ist bei einem Kraftfahrzeug der eingangs genannten Art erfindungsgemäß vorgesehen, dass wenigstens eine Symbolfläche als unveränderbares festes Symbol mit einer fest zugeordneten Funktion und wenigstens eine weitere Symbolfläche als variables Symbol mit jeweils wenigstens einer variabel zugeordneten Funktion ausgebildet ist, so dass für das wenigstens eine feste Symbol und das wenigstens eine variable Symbol eine einheitliche Funktionsauswahl und-auslösung vorgesehen ist.

Der Begriff "Symbol" ist dabei im weitesten Sinne zu verstehen; gemeint sind z. B. Piktogramme, Bilder, Textdarstellungen, Grafiken o. ä. sowie Mischformen von Bild und Text usw.

Der Fahrer hat also im erfindungsgemäßen Kraftfahrzeug nicht nur, wie sonst bei Blickauswahlsystemen üblich, ein variables Symbol mit einer variabel zugeordneten Funktion zur Auswahl, sondern daneben gibt es ebenso wenigstens ein unveränderbares festes Symbol, dem eine Funktion fest zugeordnet ist. Es gibt also sowohl funktionelle "Hardkeys" als auch "Softkeys". Diese bisher unterschiedlich behandelten Konzepte werden nun im erfindungsgemäßen Kraftfahrzeug in einem Konzept zur Blickauswahl und anschließenden Funktionsauslösung zusammengeführt. Die Einschränkung in Sicherheit sowie Komfort, die bei herkömmlichen Stellelementen gegeben sind, lassen sich so umgehen. Eine Symbolfläche mit einem unveränderbaren festen Symbol und einer fest zugeordneten Funktion muss nicht länger in Reichweite des Fahrers positioniert sein, wodurch größere Fahrzeugbereiche als bisher für entsprechende Symbolflächen zur Verfügung stehen. Dennoch bleiben die Vorteile einer festen Funktionsbelegung, nämlich dass die Position häufiger benutzter fester Funktionen durch Gewöhnung erlernt wird und dann geradezu "automatisch" abrufbar ist, erhalten. Die Funktionsauswahl und -auslösung erfolgt für feste und variable Symbole einheitlich, so dass eine größere Konsistenz gegeben ist.

In einer ersten Ausgestaltung der Erfindung ist vorgesehen, dass wenigstens eine der der einen oder den mehreren Symbolflächen zugeordneten Funktionen eine Fahrerassistenzfunktion ist und/oder dass wenigstens eine der der einen oder den mehreren Symbolflächen zugeordneten Funktionen eine Komfortfunktion, insbesondere Radio und/oder CD und/oder Kassette und/oder DVD und/oder Navigation und/oder Info und/oder Telefon und/oder E-Mail und/oder Internet, ist. Dabei ist zu berücksichtigen, dass bislang vor allem die sogenannten Komfortfunktionen, insbesondere aus dem Infotainment-Bereich, als "Hardkeys" in Form herkömmlicher Stellelemente realisiert sind. Da gerade der Informations- und Unterhaltungsbereich in Kraftfahrzeugen in Zukunft noch an Bedeutung gewinnen wird, z. B. im Rahmen einer verstärkten Internetnutzung zur Gewinnung von Informationen über das Wetter oder Verkehrsgeschehen, ist es hier besonders wichtig, die Sicherheitsvorteile einer Funktionsauswahl per Blick nutzen zu können. Im Zusammenhang mit Fahrerassistenzfunktionen, bei denen in aller Regel komplexere Informationen zu erfassen sind, kann die Zeitersparnis durch eine Blickauswahl wichtig sein. Wenn die Funktionsauswahl für Fahrerassistenzfunktionen und Komfortfunktionen in der gleichen Art und Weise erfolgt, stellt dies eine deutliche Erleichterung für den Fahrer dar, der sich nicht mehr merken muss, wie eine bestimmte Funktion anzuwählen ist. Entsprechend ist es zweckmäßig, wenn das erfindungsgemäße Kraftfahrzeug erlaubt, möglichst viele Funktionen per Blickauswahl zu bestimmen, da der Fahrer sich an eine solche einheitliche Bedienung schnell gewöhnt und somit die Sicherheit erhöht ist.

Weiterhin ist bei dem erfindungsgemäßen Kraftfahrzeug vorgesehen, dass die wenigstens eine als variables Symbol ausgebildete Symbolfläche Teil eines Displays, insbesondere eines Head-Up-Displays oder eines Flüssigkristalldisplays, ist. Dabei ist es insbesondere zweckmäßig, bereits im Kraftfahrzeug vorhandene Displays, z. B. für ein Navigationssystem, zu nutzen. Solche bereits vorhandenen Displays sind heute in der Regel Flüssigkristalldisplays, beispielsweise in Verbindung mit einem DVD-Player. Head-Up-Displays, bei denen eine Projektion des Bildes auf die Windschutzscheibe erfolgt, haben den Vorteil, dass der Fahrer seinen Blick nicht von der Straße abwenden muss. Damit ist eine besonders komfortable und sichere Bedienung gewährleistet. Andere Displaytypen sind natürlich ebenso zur Anzeige der variablen Symbole geeignet.

In einer Ausgestaltung des erfindungsgemäßen Kraftfahrzeugs ist vorgesehen, dass die Bestätigungseinrichtung für die Blickauswahl als Taster und/oder als Rändelrad und/oder als Schieber und/oder als Drehknopf ausgebildet ist, wobei durch Betätigung der Bestätigungseinrichtung zwischen verschiedenen Symbolflächen zwecks Auswahlkorrektur und/oder innerhalb einer Symbolfläche zwecks Feinabstimmung der Auswahl navigiert werden kann. Über die Bestätigungseinrichtung wird ein versehentliches Auslösen einer Funktion verhindert. Die Bestätigungseinrichtung sollte zentral, beispielsweise am Lenkrad, angeordnet sein, damit der Fahrer die Hand nicht vom Lenkrad entfernen muss. Bei einem Taster kann beispielsweise durch ein kurzes Betätigen eine erkannte Auswahl bestätigt werden, über ein langes oder mehrfaches Drücken ist eine Auswahlkorrektur möglich. Eine ähnliche Bedienung ist über das Drehen bzw. Verschieben bei einem Rändelrad, Schieber oder Drehknopf möglich. In analoger Art und Weise kann die Bestätigungseinrichtung für eine Feinabstimmung der Auswahl genutzt werden, wenn die übergeordnete Funktion schon erkannt wurde. So können über das Drehen eines Drehknopfs verschiedene Sender beim Radio angewählt werden, mehrfaches Drücken eines Tasters erlaubt die Auswahl einer entsprechenden CD mit dieser Nummer im CD-Wechsler oder die Position eines Schiebers gibt die gewählte Funktionalität eines Fahrerassistenzsystems an. Im Vordergrund steht dabei bei der Bestätigungseinrichtung eine möglichst einfache und intuitive Bedienung. Da nur die Position dieser einen Bestätigungseinrichtung erinnert werden muss, wird es in aller Regel nicht nötig sein, dass der Fahrer dazu den Blick von der Fahrbahn abwendet.

Zweckmäßigerweise ist erfindungsgemäß vorgesehen, dass die Einrichtung zur optischen Hervorhebung der im Rahmen der Erfassung der Blickrichtung des Fahrers bestimmten Symbolfläche, insbesondere durch einen Rahmen und/oder einen Schatten und/oder eine Farbänderung und/oder ein Aufblinken der Symbolfläche, ausgebildet ist. Auf diese Art und Weise kann der Fahrer seine Auswahl direkt erkennen. Die Bestätigung kann ohne eine weitere Verzögerung unmittelbar an dieses optische Hervorheben angeschlossen werden. Die Art und Weise der optischen Hervorhebung kann dabei an die Bedeutung bzw. Wichtigkeit der zugeordneten Funktion angepasst werden, beispielsweise kann das Einschalten des Radios eher "unauffällig" hervorgehoben werden, während das Setzen des Blinkers oder die Einstellung eines Fahrerassistenzsystems deutlich hervorgehoben werden sollten, z. B. durch Verwendung entsprechender Warnfarben oder ein Aufblinken mit wechselnden Zeitintervallen. Als feste Symbole ausgebildete Symbolflächen können z. B. hinterleuchtet werden oder mit einem Leuchtrahmen umgeben sein, wobei ein Aufleuchten der Leuchtelemente in wechselnden Farben möglich ist. Bei variablen Symbolen z. B. in Displays lässt sich die Darstellung leicht ändern. Farbnuancierungen, Schatten, Rahmen oder Änderungen des Symbols, z. B. durch Ergänzung des Textes "Auswahl" oder durch Ergänzung grafischer Bestandteile sind möglich.

Zusätzlich kann die Einrichtung zur akustischen Information des Fahrers bei einer im Rahmen der Erfassung der Blickrichtung bestimmten Symbolfläche, insbesondere durch einen Signalton und/oder eine Sprachausgabe, ausgebildet sein. Dabei kann ein kurzer gleichbleibender Signalton signalisieren, dass überhaupt eine Auswahl stattgefunden hat, während charakteristische, möglichst leicht erlernbare Signaltöne oder Melodien für bestimmte Funktionen stehen können. Durch eine Sprachausgabe lassen sich Mehrdeutigkeiten vermeiden, zudem kann der Fahrer direkt auf die Folgen einer Funktionsauswahl oder aber auf verschiedene Optionen im Rahmen einer Feinabstimmung hingewiesen werden.

Eine Ausgestaltung der Erfindung sieht vor, dass wenigstens eine Symbolfläche zur alternativen manuellen Auswahl als Stellelement ausgebildet ist, bei dessen Betätigung eine zugeordnete Funktion direkt ausgelöst wird. Dies kann in manchen Situationen vorteilhaft sein, wenn beispielsweise gleichzeitig eine andere Symbolfläche über eine Blickauswahl ausgewählt werden soll. Eine solche gleichzeitige Auswahl ist nur mit Blickauswahl nicht möglich. Vor allem bietet die alternative manuelle Auswahl für Fahrer, die nicht an die Blickauswahl gewöhnt sind, den Vorteil, dass eine langsame schrittweise Umgewöhnung möglich ist, ohne dass der gegenwärtige Bedienkomfort und die Sicherheit eingeschränkt werden.

Weiterhin kann vorgesehen sein, dass wenigstens eine Symbolfläche an der A-Säule und/oder der Schalttafeloberkante und/oder der Windschutzscheibe und/oder der Motorhaube lokalisiert ist. Auf diese Art und Weise werden Fahrzeugflächen genutzt, die nicht im unmittelbaren Greifbereich des Fahrers liegen, daher bisher kaum funktionell belegt sind. Dies bietet erhebliche Vorteile, da die Zahl der realisierten Funktionen in modernen Fahrzeugen auch in nächster Zeit noch weiter zunehmen wird. Durch Symbolflächen in diesen bisher nicht verwendeten Bereichen ist zudem bei festen Symbolen eine weitere Differenzierung möglich.

Schließlich ist in einer Ausgestaltung der Erfindung vorgesehen, dass die Einrichtung wenigstens zwei Kameras und/oder eine Speichereinheit zur Ablage möglicher zur Erfassung und Bestimmung der Blickrichtung erforderlicher Daten und/oder Algorithmen und/oder eine Recheneinheit zur Durchführung möglicher im Rahmen der Erfassung und Bestimmung erforderlicher Berechnungen umfasst. Durch die Verwendung mehrerer Kameras können Fehler bei der Erfassung der Blickrichtung minimiert werden. Damit tatsächlich eine Funktion ausgelöst werden kann, ist eine Analyse und Auswertung der Blickrichtung erforderlich, beispielsweise ein Vergleich mit einer gespeicherten "Karte" des Sichtbereichs des Fahrers. Unter Umständen sind außerdem bestimmte Berechnungen erforderlich, zu denen auch Kontrollberechnungen zur Verifizierung der Blickerfassung usw. gehören können. Zur Vereinfachung ist es zweckmäßig, sowohl die Kameras als auch eine mögliche Speicher- und Recheneinheit in die zentrale Einrichtung zur Erfassung der Blickrichtung, zur Bestimmung einer betrachteten Symbolfläche und zur Auslösung der zugeordneten Funktion zu integrieren.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine Skizze des Sichtbereichs des Fahrers eines erfindungsgemäßen Kraftfahrzeugs.

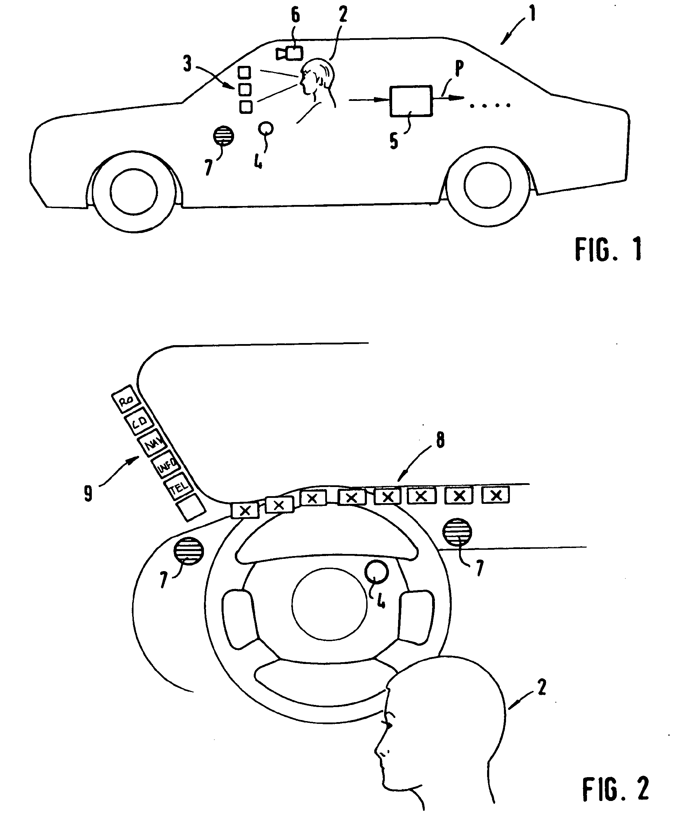

Fig. 1 zeigt eine Prinzipskizze eines erfindungsgemäßen Kraftfahrzeugs 1. Im Sichtbereich des Fahrers 2 befinden sich verschiedene Symbolflächen 3, von denen wenigstens eine als unveränderbares festes Symbol oder dergleichen mit einer fest zugeordneten Funktion und wenigstens eine weitere als variables Symbol mit jeweils wenigstens einer variabel zugeordneten Funktion ausgebildet ist. Außerdem ist die Bestätigungseinrichtung 4 im Griffbereich des Fahrers dargestellt. Die Einrichtung 5 ist zur Erfassung der Blickrichtung des Fahrers bezüglich der Symbolflächen 3, zur Bestimmung einer betrachteten Symbolfläche 3 und zur Auslösung der einer Symbolfläche 3 zugeordneten Funktion in Abhängigkeit des Erfassungsergebnisses ausgebildet. Hier fließen also die verschiedensten Daten zusammen, beispielsweise Daten der Kameras 6, die Teil der Einrichtung 5 sind, Daten, die die Bestätigungseinrichtung 4 liefert, sowie in der Einrichtung 5 gespeicherte Daten. Die Einrichtung 5 kann weiterhin über eine Recheneinheit verfügen, die zum Vergleich der erfassten Blickrichtung mit einer gespeicherten "Karte" des Sichtbereichs des Fahrers 2 nötig ist, aber auch Kontrollberechnungen durchführen kann, um mögliche Fehler bei der Bestimmung der Blickrichtung zu minimieren. Die Einrichtung 5 löst dann die jeweilige ausgewählte feste oder variable Funktion aus, hier dargestellt durch einen Pfeil P. Außerdem sind Lautsprecher 7 dargestellt, die ebenfalls wieder Teil der Einrichtung 5 sind, und der akustischen Information des Fahrers 2 über eine im Rahmen der Erfassung der Blickrichtung bestimmte Symbolfläche dienen. Über die Lautsprecher 7 können Töne, Melodien oder auch komplette Sätze oder Texte ausgegeben werden, ebenso ist es denkbar, dass der Fahrer zwischen diesen verschiedenen akustischen Informationsarten wählen kann. Die akustische Information kann eine optische Hervorhebung der Symbolflächen 3 unterstützen. Ebenso wie die optische Hervorhebung kann sie der aktuellen Fahrsituation bzw. der Wichtigkeit der ausgewählten Funktion angepasst sein.

Fig. 2 stellt eine Skizze des Sichtbereichs des Fahrers eines erfindungsgemäßen Kraftfahrzeugs 1 dar. An der Schalttafeloberkante sind als variable Symbole ausgebildete Symbolflächen 8 dargestellt. Entlang der A-Säule befinden sich als feste Symbole ausgebildete Symbolflächen 9. Die als unveränderbare feste Symbole ausgebildeten Symbolflächen 9 sind hier mit Komfortfunktionen belegt, hier können also fest häufig benutzte Informations- und Unterhaltungsfunktionen angewählt werden. Da diese Bereiche nicht in unmittelbarer Reichweite des Fahrers liegen, sind sie in herkömmlichen Kraftfahrzeugen in der Regel nicht funktionell belegt. Die Symbolflächen mit festen Symbolen 9 sind praktisch "Hardkeys", die beispielsweise eine feste hinterleuchtete Beschriftung aufweisen können, wobei dann eine Blickauswahl optisch durch ein Aufblinken oder eine Änderung der Hintergrundfarbe hervorgehoben werden kann. Alternativ oder zusätzlich dazu kann ein optisches Hervorheben durch Aufblinken oder Farbänderungen eines die Symbolfläche 9 umgebenden Rahmens oder einer anderen Leuchtfläche auf oder neben der Symbolfläche 9 z. B. in Kreis- oder Rechteckform erreicht werden. Die Symbolflächen 8 mit variabel zugeordneten Funktionen können Teil eines Displays sein, im dargestellten Fall beispielsweise eines Flüssigkristalldisplays. Symbolflächen mit variablen Symbolen 8 können zur optischen Hervorhebung bei Blickauswahl aufblinken, die Farbe ändern, mit einem Schatten versehen werden oder um Piktogramme, Texte wie "Auswahl" oder dergleichen ergänzt werden. Ebenso ist eine Invertierung der Vordergrund- und Hintergrundfarben o. ä. möglich. Außerdem ist die Bestätigungseinrichtung 4 für die Blickauswahl gezeigt, hier in Form eines Rändelrads oder Drehknopfs, die natürlich parallel als Taster fungieren können. Der Fahrer 2 blickt im dargestellten Fall auf das feste Telefonsymbol, das zur Bestätigung der Auswahl aufblinken könnte, während gleichzeitig über die Lautsprecher 7 eine Ton- oder Sprachausgabe erfolgen kann, beispielsweise kann das Wort "Telefon" angesagt werden oder der Fahrer kann aufgefordert werden, eine Nummer zu wählen. Auf den Symbolflächen 8 mit variablen Symbolen und Funktionen können entsprechend Ziffern angezeigt und über Blickauswahl oder die Bestätigungseinrichtung 4 gewählt werden. Der Fahrer kann somit z. B. problemlos telefonieren, ohne eine Hand vom Lenkrad zu entfernen oder den Blick vollständig vom Straßengeschehen abwenden zu müssen. Dadurch sind die Sicherheit und der Bedienkomfort erhöht. Feste und variable Funktionen können im Kontext eines einheitlichen Konzepts angewählt und ausgelöst werden.

## Patentansprüche

1. Kraftfahrzeug umfassend Symbolflächen mit jeweils einem eine kfzseitig ausführbare Funktion darstellenden Symbol im Sichtbereich des Fahrers, eine Einrichtung zur Erfassung der Blickrichtung des Fahrers bezüglich der Symbolflächen, zur Bestimmung einer betrachteten Symbolfläche und zur Auslösung der einer Symbolfläche zugeordneten Funktion in Abhängigkeit des Erfassungsergebnisses sowie eine Bestätigungseinrichtung für die Blickauswahl,
**dadurch gekennzeichnet,**
**dass** wenigstens eine Symbolfläche (3) als unveränderbares festes Symbol mit einer fest zugeordneten Funktion und wenigstens eine weitere Symbolfläche (3) als variables Symbol mit jeweils wenigstens einer variabel zugeordneten Funktion ausgebildet ist, so dass für das wenigstens eine feste Symbol und das wenigstens eine variable Symbol eine einheitliche Funktionsauswahl und -auslösung vorgesehen ist.

2. Kraftfahrzeug nach Anspruch 1,
**dadurch gekennzeichnet,**
**dass** wenigstens eine der der einen oder den mehreren Symbolflächen (3) zugeordneten Funktionen eine Fahrerassistenzfunktion ist und/oder dass wenigstens eine der der einen oder den mehreren Symbolflächen (3) zugeordneten Funktionen eine Komfortfunktion, insbesondere Radio und/oder CD und/oder Kassette und/oder DVD und/oder Navigation und/oder Info und/oder Telefon und/oder E-Mail und/oder Internet, ist.

3. Kraftfahrzeug nach Anspruch 1 oder 2,
**dadurch gekennzeichnet,**
**dass** die wenigstens eine als variables Symbol ausgebildete Symbolfläche (8) Teil eines Displays, insbesondere eines Head-Up-Displays oder eines Flüssigkristalldisplays, ist.

4. Kraftfahrzeug nach einem der vorangehenden Ansprüche,
**dadurch gekennzeichnet,**
**dass** die Bestätigungseinrichtung (4) für die Blickauswahl als Taster und/oder als Rändelrad und/oder als Schieber und/oder als Drehknopf ausgebildet ist, wobei durch Betätigung der Bestätigungseinrichtung (4) zwischen verschiedenen Symbolflächen (3) zwecks Auswahlkorrektur und/oder innerhalb einer Symbolfläche (3) zwecks Feinabstimmung der Auswahl navigiert werden kann.

5. Kraftfahrzeug nach einem der vorangehenden Ansprüche,
**dadurch gekennzeichnet,**
**dass** die Einrichtung (5) zur optischen Hervorhebung der im Rahmen der Erfassung der Blickrichtung des Fahrers bestimmten Symbolfläche (3), insbesondere durch einen Rahmen und/oder einen Schatten und/oder eine Farbänderung und/oder ein Aufblinken der Symbolfläche (3), ausgebildet ist.

6. Kraftfahrzeug nach einem der vorangehenden Ansprüche,
**dadurch gekennzeichnet,**
**dass** die Einrichtung (5) zur akustischen Information des Fahrers bei einer im Rahmen der Erfassung der Blickrichtung bestimmten Symbolfläche (3), insbesondere durch einen Signalton und/oder eine Sprachausgabe, ausgebildet ist.

7. Kraftfahrzeug nach einem der vorangehenden Ansprüche,
**dadurch gekennzeichnet,**
**dass** wenigstens eine Symbolfläche (3) zur alternativen manuellen Auswahl als Stellelement ausgebildet ist, bei dessen Betätigung eine zugeordnete Funktion direkt ausgelöst wird.

8. Kraftfahrzeug nach einem der vorangehenden Ansprüche,
**dadurch gekennzeichnet,**
**dass** wenigstens eine Symbolfläche (3) an der A-Säule und/oder der Schalttafeloberkante und/oder der Windschutzscheibe und/oder der Motorhaube lokalisiert ist.

9. Kraftfahrzeug nach einem der vorangehenden Ansprüche,
**dadurch gekennzeichnet,**
**dass** die Einrichtung (5) wenigstens zwei Kameras (6) und/oder eine Speichereinheit zur Ablage möglicher zur Erfassung und Bestimmung der Blickrichtung erforderlicher Daten und/oder Algorithmen und/oder eine Recheneinheit zur Durchführung möglicher im Rahmen der Erfassung und Bestimmung erforderlicher Berechnungen umfasst.

## Claims

1. Motor vehicle, including symbol fields each having, within the field of view of the driver, a symbol representing a respective function executable by the motor vehicle, an arrangement for detecting the direction of view of the driver with respect to the symbol fields, for determining a symbol field being viewed and for actuating the function associated with a symbol field in dependence on the detection result, and a confirmation arrangement for the view selection, **characterised in that** at least one symbol field (3) is configured as an invariable permanent symbol with a permanently-associated function and at least one further symbol field (3) is configured as a variable symbol with at least one variably-associated function in each case, so that unified function selection and actuation is provided for the at least one permanent symbol and the at least one variable symbol.

2. Motor vehicle according to Claim 1, **characterised in that** at least one of the functions associated with the one or more symbol fields (3) is a driver-assistance function, and/or **in that** at least one of the functions associated with the one or more symbol fields (3) is a comfort function, in particular radio and/or CD and/or cassette and/or DVD and/or navigation and/or information and/or telephone and/or e-mail and/or Internet.

3. Motor vehicle according to Claim 1 or 2, **characterised in that** the at least one symbol field (8) configured as a variable symbol forms part of a display, in particular of a head-up display or of a liquid-crystal display.

4. Motor vehicle according to any one of the preceding claims, **characterised in that** the confirmation arrangement (4) for the view selection is in the form of a push-button and/or a knurled wheel and/or a slider and/or a rotary knob, it being possible to navigate between different symbol fields (3) for the purpose of correction of the selection, and/or within a symbol field (3) for the purpose of fine adjustment of the selection, by actuation of the confirmation arrangement (4).

5. Motor vehicle according to any one of the preceding claims, **characterised in that** the arrangement (5) for optical emphasis of the symbol field (3) determined in the context of detecting the direction of view of the driver is configured, in particular, in the form of a frame and/or a shading and/or a colour change and/or a flashing of the symbol field (3).

6. Motor vehicle according to any one of the preceding claims, **characterised in that** the arrangement (5) for acoustic information of the driver is configured, in the case of a symbol field (3) determined in the context of detecting the direction of view, in particular by a signal tone and/or a speech output.

7. Motor vehicle according to any one of the preceding claims, **characterised in that** at least one symbol field (3) is configured as an actuating element for alternative manual selection, upon actuation of which an associated function is actuated directly.

8. Motor vehicle according to any one of the preceding claims, **characterised in that** at least one symbol field (3) is located on the A-pillar and/or on the upper edge of the switch panel and/or on the windscreen and/or on the hood.

9. Motor vehicle according to any one of the preceding claims, **characterised in that** the arrangement (5) includes at least two cameras (6) and/or a storage unit for storing possible data and/or algorithms required for detecting and determining the direction of view, and/or an arithmetic unit for executing possible calculations required in the context of the detection and determination.

## Revendications

1. Véhicule automobile comprenant des surfaces à symbole avec respectivement un symbole représentant une fonction exécutable côté véhicule dans le champ de vision du conducteur, un dispositif de détection de la direction du regard du conducteur par rapport aux surfaces à symbole, de détermination d'une surface à symbole observée et de déclenchement de la fonction associée à une surface à symbole en fonction du résultat de détection ainsi qu'un dispositif de validation pour la sélection par le regard,
**caractérisé en ce**
**qu'**au moins une surface à symbole (3) est réalisée sous forme de symbole fixe inchangeable avec une fonction associée de manière fixe et au moins une autre surface à symbole (3) est réalisée sous forme de symbole variable avec respectivement au moins une fonction associée de manière variable de sorte que pour l'au moins un symbole fixe et l'au moins un symbole variable une sélection et un déclenchement de fonction uniforme est prévu.

2. Véhicule automobile selon la revendication 1,
**caractérisé en ce**
**qu'**au moins une des fonctions associées à l'une ou à la pluralité de surfaces à symbole (3) est une fonction d'assistance au conducteur et/ou qu'au moins une des fonctions associées à l'une ou à la pluralité de surfaces à symbole (3) est une fonction de confort, en particulier radio et/ou CD et/ou cassette et/ou DVD et/ou navigation et/ou info et/ou téléphone et/ou E-mail et/ou Internet.

3. Véhicule selon la revendication 1 ou 2,
**caractérisé en ce**
**que** l'au moins une surface à symbole (8) réalisée sous forme de symbole variable fait partie d'un écran, en particulier d'un affichage à tête haute ou d'un écran à cristaux liquides.

4. Véhicule automobile selon l'une quelconque des revendications précédentes,
**caractérisé en ce**
**que** le dispositif de validation (4) pour la sélection par le regard est réalisé sous forme de bouton-poussoir et/ou de molette et/ou de coulisseau et/ou de bouton rotatif, dans lequel il est possible de naviguer par actionnement du dispositif de validation (4) entre différentes surfaces à symbole (3) pour corriger la sélection et/ou à l'intérieur d'une surface à symbole (3) pour régler précisément la sélection.

5. Véhicule automobile selon l'une quelconque des revendications précédentes,
**caractérisé en ce**
**que** le dispositif (5) est développé pour la mise en évidence optique de la surface à symbole (3) déterminée dans le cadre de la détection de la direction du regard du conducteur, en particulier par un cadre et/ou une ombre et/ou un changement de couleur et/ou un clignotement de la surface à symbole (3).

6. Véhicule automobile selon l'une quelconque des revendications précédentes,
**caractérisé en ce**
**que** le dispositif (5) est développé pour l'information acoustique du conducteur dans le cas d'une surface à symbole (3) déterminée dans le cadre de la détection de la direction du regard, en particulier par un signal acoustique et/ou une émission vocale.

7. Véhicule automobile selon l'une quelconque des revendications précédentes,
**caractérisé en ce**
**qu'**au moins une surface à symbole (3) est réalisée pour la sélection manuelle alternative comme élément de réglage lors de l'actionnement duquel une fonction associée est directement déclenchée.

8. Véhicule automobile selon l'une quelconque des revendications précédentes,
**caractérisé en ce**
**qu'**au moins une surface à symbole (3) est localisée au niveau de la colonne A et/ou du bord supérieur du tableau de commande et/ou du pare-brise et/ou du capot de moteur.

9. Véhicule automobile selon l'une quelconque des revendications précédentes,
**caractérisé en ce**
**que** le dispositif (5) comprend au moins deux caméras (6) et/ou une unité mémoire permettant de stocker des données éventuellement nécessaires à l'enregistrement et à la détermination de la direction du regard et/ou des algorithmes et/ou une unité de calcul pour réaliser des calculs éventuellement nécessaires dans le cadre de la détection et de la détermination.
